# EUROPÄISCHE PATENTSCHRIFT

(11) **EP 1 373 011 B1**
(45) Veröffentlichungstag und Bekanntmachung des Hinweises auf die Patenterteilung: **14.06.2006**
(21) Anmeldenummer: 02706778.4
(22) Anmeldetag: 22.03.2002
(51) Int. Cl.: B60N 2/015, E05B 65/12

(54) **VORRICHTUNG, INSBESONDERE VERRIEGELUNGSVORRICHTUNG FÜR EINEN FAHRZEUGSITZ**
DEVICE, ESPECIALLY A LOCKING DEVICE FOR A VEHICLE SEAT
DISPOSITIF, EN PARTICULIER DISPOSITIF DE VERROUILLAGE POUR UN SIEGE DE VEHICULE

(30) Priorität: 29.03.2001 DE 10115667
(43) Veröffentlichungstag der Anmeldung: 02.01.2004
(73) Patentinhaber: KEIPER GmbH & Co. KG, 67657 Kaiserslautern (DE)
(72) Erfinder: CHRISTOFFEL, Thomas, 66909 Herschweiler-Pettersheim (DE); KRAUS, Martin, 67806 Katzenbach (DE); YASAROGLU, Kadir, 67661 Kaiserslautern (DE); MÜLLER, pETER, 67661 Kaiserslautern (DE)
(74) Vertreter: Patentanwälte Hosenthien-Held und Dr. Held
(86) Internationale Anmeldenummer: PCT/EP2002/003207
(87) Internationale Veröffentlichungsnummer: WO 2002/078998

(56) Entgegenhaltungen:
- EP-A- 0 952 288
- DE-A- 10 001 659
- US-A- 4 765 682

## Beschreibung

Die Erfindung betrifft eine Vorrichtung, insbesondere eine Verriegelungsvorrichtung für einen Fahrzeugsitz, mit den Merkmalen des Oberbegriffs des Anspruches 1.

Eine bekannte Vorrichtung dieser Art (siehe z.B. EP-A-0 952 288) dient als Verriegelungsvorrichtung für einen Fahrzeugsitz, welche mehrere relativ zueinander schwenkbare Klinken, Riegel und Exzenter aufweist. Als Lagerstellen sind Lagerbolzen vorgesehen, welche in definiertem Abstand zueinander auf einem Träger angebracht werden, welcher zugleich als Gehäuseteil dient. Für einen fehlerfreien Gebrauch müssen die verwendeten Bauteile mit geringen Toleranzen hergestellt und montiert sein. Kalibriermöglichkeiten bestehen nur in geringem Maße.

Der Erfindung liegt die Aufgabe zu Grunde, eine Vorrichtung und ein Verfahren der eingangs genannten Art zu verbessern. Diese Aufgabe wird erfindungsgemäß durch eine Vorrichtung mit den Merkmalen des Anspruches 1 gelöst. Vorteilhafte Ausgestaltungen sind Gegenstand der Unteransprüche.

Dadurch, daß die Lagerstelle als ein durch Umformen hergestellter erster Durchzug einstückig am ersten Gehäuseteil ausgebildet ist, verringert sich die Anzahl der benötigten Bauteile und damit der Montageaufwand, da keine Lagerbolzen benötigt werden. Da weniger Einzelteile und eine geringere Anzahl von Montagevorgängen notwendig sind, können auch geringere Gesamttoleranzen erreicht werden. Die Ausbildung der Durchzüge steigert auch die Festigkeit in diesem Bereich um etwa das zwei- bis dreifache, so daß ein Grundmaterial mit niedrigerer Ausgangsgüte verwendet werden kann. Auf einem Durchzug können außer drehbar gelagerten Elementen auch andere Bauteile, beispielsweise Gehäuseteile, gelagert werden. In bevorzugter Ausführung sind zwei Gehäuseteile durch ineinander gesteckte Durchzüge in der Art einer Schachtelung verbunden. Der erste Durchzug weist dann beispielsweise zwei Funktionen auf, indem er auf seiner Außenseite das drehbar gelagerte Element lagert und mit seiner Innenseite einen zweiten Durchzug zu Lagerungszwecken aufnimmt (oder in anderer Betrachtungsweise mit seiner Innenseite auf dem zweiten Durchzug gelagert ist), d.h. der erste Durchzug dient als Lagerstelle des beweglichen Elementes und zur Positionierung und Lagerung eines weiteren Gehäuseteils. Eine solche Mehrfachfunktion reduziert die Bauteileanzahl und senkt damit die Montagekosten.

Vorzugsweise dienen die Durchzüge außerdem noch zur Lagerung an und Verbindung der Gehäuseteile mit einer Struktur, beispielsweise einem Fuß eines Fahrzeugsitzes. Im Falle der bevorzugten Schachtelung der Durchzüge weist dann auch der zweite Durchzug zwei Funktionsen auf, indem er mit der Außenseite im ersten Durchzug gelagert ist und mit seiner Innenseite eine Befestigungsschraube oder dergleichen aufnimmt. Für eine in axialer Richtung der Durchzüge spielfreie Lagerung der Elemente und/oder eine enge Anlage der Ränder der miteinander verschachtelten Gehäuseteile ist eine angepaßte axiale Länge der Durchzüge vorteilhaft.

Bei höheren Anforderungen an das Zusammenwirken der Bauteile ist ein Kalibrieren der Durchzüge vorteilhaft, bei welchem die Durchzüge durch Außenstempel und/oder Innenstempel auf exakte Außendurchmesser bzw. Innendurchmesser gebracht werden. Es werden dadurch bessere Toleranzen als bei der ursprünglichen Herstellung der Durchzüge erreicht, wodurch ein exaktes Zusammenwirken der Elemente der Vorrichtung möglich ist. Eine vorzugsweise vorgesehene Materialaufnahme im Übergangsbereich zwischen Durchzug und Gehäuseteil kann das überschüssige Material beim Kalibrieren aufnehmen, wodurch exakte axiale Toleranzen eingehalten werden können. Durch das Kalibrieren kann auch Durchzügen mit ursprünglich ringförmigem Querschnitt eine andere Form gegeben werden.

Die Erfindung kann bei einer Verriegelungsvorrichtung angewendet werden, wo aus Sicherheitsgründen die Elemente funktionssicher miteinander wechselwirken sollen, also geringe Toleranzen wichtig sind. Sie kann aber auch bei anderen Vorrichtung, insbesondere in einem Fahrzeugsitz, Anwendung finden.

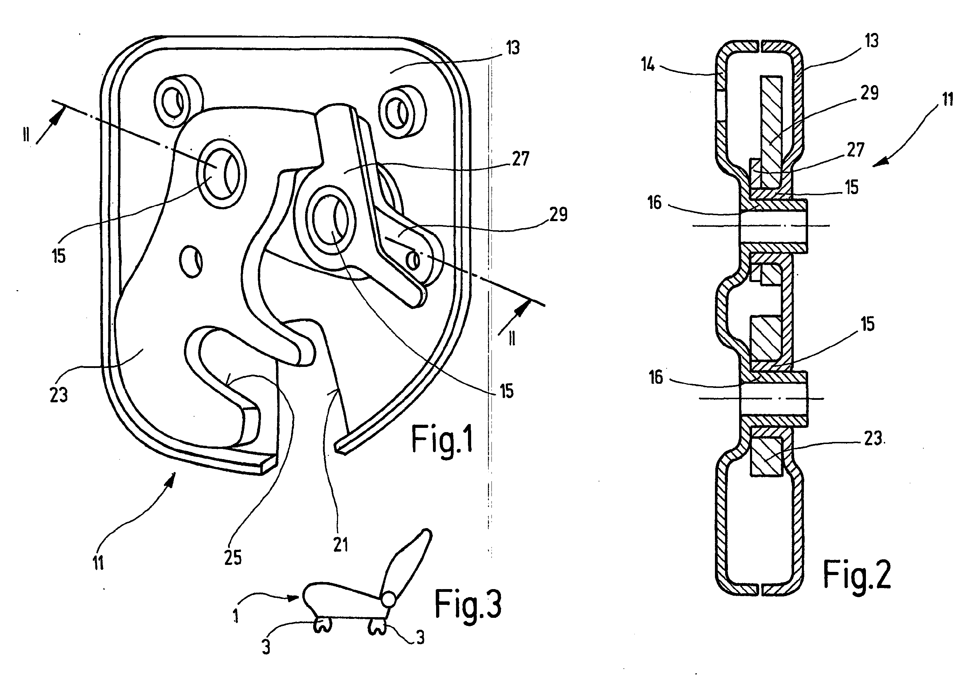

Im folgenden ist die Erfindung anhand eines in der Zeichnung dargestellten Ausführungsbeispiels näher erläutert. Es zeigen
- Fig. 1: eine perspektivische Teilansicht des Ausführungsbeispiels ohne zweites Gehäuseteil,
- Fig. 2: einen Schnitt durch das Ausführungsbeispiel entlang der Linie II-II in Fig. 1,
- Fig. 3: eine schematische Seitenansicht eines Fahrzeugsitzes mit erfindungsgemäßer Verriegelungsvorrichtung,
- Fig. 4: eine Darstellung des ersten Durchzugs vor der Kalibrierung des Außendurchmessers,
- Fig. 5: eine Darstellung des ersten Durchzugs während der Kalibrierung des Außendurchmessers,
- Fig. 6: eine Darstellung des ersten Durchzugs nach der Kalibrierung des Außendurchmessers, und
- Fig. 7: eine Darstellung des ersten Durchzugs während der Kalibrierung des Innendurchmessers.

Ein Fahrzeugsitz 1 ist für eine zweite oder dritte Sitzreihe in einem Kraftfahrzeug, insbesondere in einem sogenannten Van, ausgebildet. Für vielfältige, einfach durchzuführende Umgestaltungsmöglichkeiten des Innenraums des Kraftfahrzeuges ist der Fahrzeugsitz 1 mittels vier paarweise vorgesehener Füße 3 an der Fahrzeugstruktur angebracht. Hierzu weisen vorzugsweise beide Paare von Füßen 3 jeweils eine nachfolgend genauer beschriebene Verriegelungsvorrichtung 11 auf, mittels welcher sie mit Bolzen im Fahrzeugboden verriegelt sind.

Die Verriegelungsvorrichtung 11 weist ein erstes Gehäuseteil 13 und ein zweites Gehäuseteil 14 auf, welche beide aus Blech mittels Umformen hergestellt sind und eine im wesentlichen flache Grundform mit hochgezogenem Rand aufweisen. Am ersten Gehäuseteil 13 sind auf der Innenseite zwei voneinander definiert beabstandete, senkrecht vom ersten Gehäuseteil 13 abstehende, erste Durchzüge 15 in Tubus-Form ausgebildet. Am zweiten Gehäuseteil 14 sind in entsprechender Weise auf der Innenseite zwei gleich beabstandete, ebenfalls senkrecht abstehende, zweite Durchzüge 16 in Tubus-Form von geringerem Durchmesser ausgebildet.

Beim Zusammenbau der Verriegelungsvorrichtung 11 werden die beiden Gehäuseteil 13 und 14 mit den einander zugewandten Durchzügen 15 und 16 so zusammengesteckt, daß die zweiten Durchzüge 16 durch die hohlen ersten Durchzüge 15 geschoben werden, bis die beiden Gehäuseteile 13 und 14 vollständig in Anlage aneinander gelangen. Die zweiten Durchzüge 16 ragen dann mit ihrem freien Ende über Außenseite des ersten Gehäuseteils 13 hinaus, also über die von den ersten Durchzügen 15 abgewandte Seite hinaus. Die zweiten Durchzüge 16 werden dann mit dem ersten Gehäuseteil 13 verbunden, beispielsweise durch eine Taumelnietung. Die beiden Gehäuseteile 13 und 14 bilden dann ein nahezu geschlossenes Gehäuse, welches auf der Unterseite eine Bolzenaufnahme 21 aufweist.

Einer der beiden ersten Durchzüge 15 dient als Lagerstelle für eine schwenkbare Klinke 23, die mit einem Hakenmaul 25 im Bereich der Bolzenaufnahme 21 aus dem durch die beiden Gehäuseteile 13 und 14 gebildeten Gehäuse ragt. Die Klinke 23 dient der lösbaren Verriegelung mit dem genannten Bolzen im Fahrzeugboden. Der andere der beiden Durchzüge 15 dient als Lagerstelle für einen federbelasteten, schwenkbaren Spannexzenter 27, welcher die Klinke 23 in ihrer verriegelten Stellung hält, und zugleich als Lagerstelle für einen schwenkbaren Fangexzenter 29, welcher die Klinke 23 im Crashfall am Öffnen hindert und vor dem Entriegeln der Klinke 23 zurückgeschwenkt wird. Die beiden hohlen zweiten Durchzüge 16 können für eine Befestigung der Verriegelungsvorrichtung 11 oder als Lagerstelle verwendet werden.

Damit einerseits die Klinke 23, der Spannexzenter 27 und der Fangexzenter 29 funktionssicher zusammenwirken und andererseits die Verbindung der beiden Gehäuseteile 13 und 14 über die Durchzüge 15 und 16 erfolgen kann, müssen die Innen- und Außendurchmesser der Durchzüge 15 und 16 sowie deren Abstand innerhalb gewisser Toleranzen gearbeitet sein. Bei höheren Anforderungen an das Zusammenwirken ist es vorteilhaft, die Durchzüge 15 und 16 zu kalibrieren, so daß sie nur noch geringe Toleranzen aufweisen. Beispielhaft ist nachfolgend die Kalibrierung eines ersten Durchzugs 15 beschrieben.

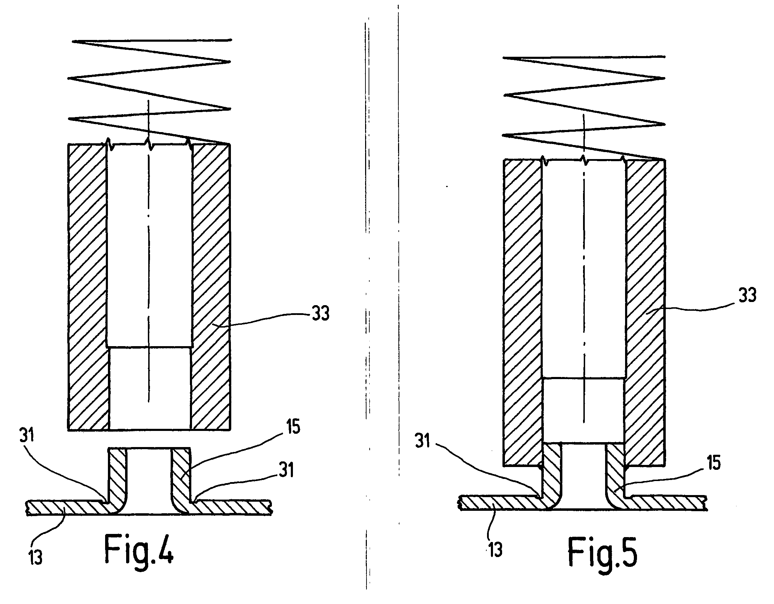

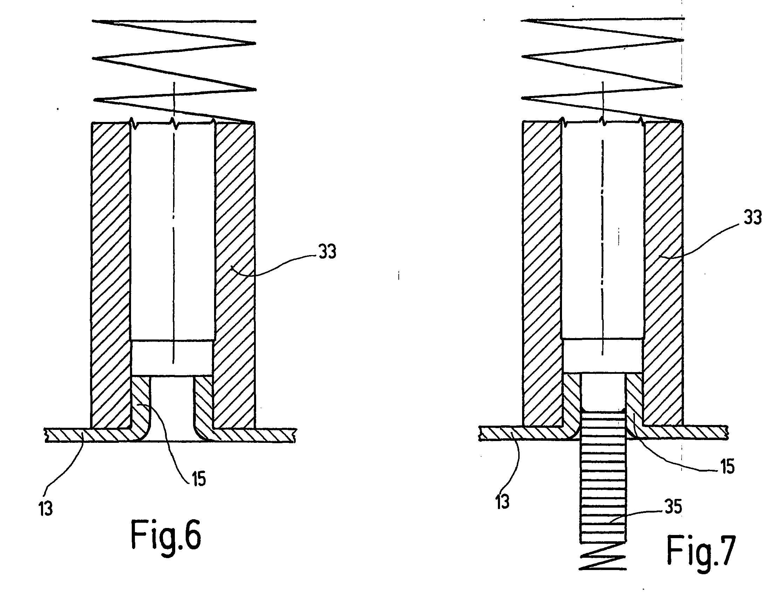

Der erste Durchzug 15 kann beispielsweise mit einem an der oberen Toleranzgrenze liegenden, äußeren Ausgangsmaß und einem an der unteren Toleranzgrenze liegenden, inneren Ausgangsmaß hergestellt worden sein. Im Übergangsbereich zum flachen Bereich des ersten Gehäuseteils 13 ist eine rillenförmige Sicke 31 vorgesehen, welche beispielsweise ringförmig den ersten Durchzug umschließt. Zum Kalibrieren des Außendurchmessers des ersten Durchzugs 15 wird ein hohlzylindrischer Außenstempel 33 mit exaktem Innenmaß von der Innenseite her gegen das eingespannte erste Gehäuseteil 13 (Fig. 4) und über den ersten Durchzug 15 (Fig. 5) bis zur Anlage an das erste Gehäuseteil 13 (Fig. 6) gefahren. Dabei wird der erste Durchzug 15 so umgeformt, daß sein Außendurchmesser mit geringer Toleranz mit dem exakten Innenmaß des Außenstempels 33 übereinstimmt. Das überschüssige Material wird in die als Materialaufnahme dienende Sicke 31 geschoben, so daß die Kalibrierung über die gesamte Länge des ersten Durchzugs 15 erfolgt.

Anschließend wird ein zylindrischer Innenstempel 35 mit exaktem Außenmaß, welcher exakt mit dem Außenstempel 33 fluchtet, von der Außenseite her gegen das eingespannte erste Gehäuseteil 13 und durch den ersten Durchzug 15 hindurch (Fig. 7) bis zur Anlage an das erste Gehäuseteil 13 gefahren. Dabei wird durch Abschneiden des überschüssigen Materials der erste Durchzug 15 so umgeformt, daß sein Innendurchmesser mit geringer Toleranz mit dem exakten Außenmaß des Innenstempels 33 übereinstimmt. Das gegebenenfalls stirnseitig verbleibende, überschüssige Material wird durch einen Entgratungsvorgang von der Stirnseite des freien Endes des ersten Durchzugs 15 entfernt. Die Bearbeitung durch Außenstempel 33 und Innenstempel 35 kann auch in umgekehrter Reihenfolge durchgeführt werden.

Der andere erste Durchzug 15 wird auf die gleiche Weise mit parallel arbeitenden, exakt beabstandeten Stempeln bearbeitet. Alternativ kann auch im Werkzeug ein gegenüber Außenstempel 33 und Innenstempel 35 exakt beabstandeter Stift mit exaktem Durchmesser vorgesehen sein, auf welchen der zuerst bearbeitete erste Durchzug 15 gesteckt wird, um dann den anderen ersten Durchzug 15 zu bearbeiten. Beide erste Durchzüge 15 sind dann so kalibriert, daß die Mittelachse ihrer Außenund Innenwände jeweils untereinander exakt fluchten und relativ zueinander einen exakten Abstand aufweisen und daß ihre axiale Länge der Dicke der Klinke 23 und der Summe der Dicke von Spannexzenter 27 und Fangexzenter 29 entspricht. Die letztgenannten Teile mit entsprechend genauen Lagerbohrungen werden dann drehbar auf den ersten Durchzügen 15 gelagert.

Der zweite Durchzug 16 wird auf die entsprechende Weise kalibriert, zumindest hinsichtlich des Außendurchmessers der zweiten Durchzüge 16 und des Abstandes von deren Mittelachsen. Der Außendurchmesser der zweiten Durchzüge 16 stimmt dann mit gewünschter Toleranz mit dem Innendurchmesser der ersten Durchzüge 15 überein, so daß ein spielfreier Zusammenbau der beiden Gehäuseteile 13 und 14 möglich ist.

Im Ausführungsbeispiel ist die Außenseite der ersten Durchzüge 15 in Hinblick auf eine Lagerung von drehbaren Elementen kreiszylindrisch ausgebildet und die anderen Außen- und Innenseiten der Durchzüge 15 und 16 daran angepaßt. Durch das beschriebene Kalibrieren ist es aber auch möglich, die Außen- und Innenseiten je nach Anforderung anders zu gestalten, beispielsweise als Zweikant, als sechseckiges Prisma oder als ovaler Zylinder. Dieser Wechsel der Außen- bzw. Innengeometrie wird durch einen odere mehrere entsprechend geformte Kalibrierstempel erreicht, die gegebenenfalls zeitlich hintereinander schrittweise die gewünschte Kontur erzeugen.

### Bezugszeichenliste

- 1: Fahrzeugsitz
- 3: Fuß
- 11: Verriegelungsvorrichtung
- 13: erstes Gehäuseteil
- 14: zweites Gehäuseteil
- 15: erster Durchzug
- 16: zweite Durchzug
- 21.: Bolzenaufnahme
- 23: Klinke
- 25: Hakenmaul
- 27: Spannexzenter
- 29: Fangexzenter
- 31: Sicke, Materialaufnahme
- 33: Außenstempel
- 35: Innenstempel

## Patentansprüche

1. Vorrichtung, insbesondere Verriegelungsvorrichtung (11) für einen Fahrzeugsitz, mit wenigstens einem ersten Gehäuseteil (13) und wenigstens einer Lagerstelle (15) zur Lagerung wenigstens eines drehbaren Elementes (23, 27, 29), **dadurch gekennzeichnet, daß** die Lagerstelle als ein durch Umformen hergestellter erster Durchzug (15) einstückig am ersten Gehäuseteil (13) ausgebildet ist, wobei das drehbare Element (23, 27, 29) auf dem ersten Durchzug (15) gelagert ist.

2. Vorrichtung nach Anspruch 1, **dadurch gekennzeichnet, daß** ein zweites Gehäuseteil (14) vorgesehen ist, welches zusammen mit dem ersten Gehäuseteil (13) ein nahezu geschlossenes Gehäuse bildet, wobei das erste Gehäuseteil (13) zur Lagerung des zweiten Gehäuseteils (14) dient.

3. Vorrichtung nach Anspruch 2, **dadurch gekennzeichnet, daß** das zweite Gehäuseteil (14) wenigstens einen durch Umformen ausgebildeten zweiten Durchzug (16) aufweist und daß das erste Gehäuseteil (13) mit seinen ersten Durchzügen (15) auf den zweiten Durchzügen (16) des zweiten Gehäuseteils (14) gelagert ist, indem die zweiten Durchzüge (16) in die hohl ausgebildeten ersten Durchzüge (15) gesteckt sind.

4. Vorrichtung nach Anspruch 3, **dadurch gekennzeichnet, daß** das erste Gehäuseteil (13) mit dem zweiten Gehäuseteil (14) verbunden ist, indem die durch die ersten Durchzüge (15) gesteckten zweiten Durchzüge (16) mit dem ersten Gehäuseteil (13) verbunden sind.

5. Vorrichtung nach einem der Ansprüche 1 bis 4, **dadurch gekennzeichnet, daß** wenigstens zwei erste Durchzüge (15) mit einem definierten Abstand zueinander zur Lagerung von mit einander wechselwirkenden Elementen (23, 27, 29) vorgesehen sind.

6. Vorrichtung nach einem der Ansprüche 1 bis 5, **dadurch gekennzeichnet, daß** die axiale Länge der Lagerstelle (15) der Summe der Dicke der darauf gelagerten Elemente (23, 27, 29) entspricht.

7. Vorrichtung nach einem der Ansprüche 1 bis 6, **dadurch gekennzeichnet, daß** wenigstens einer der vorgesehenen Durchzüge (15,16) auf einen exakten Durchmesser kalibriert ist durch Umformen mittels eines Stempels (33, 35).

8. Vorrichtung nach Anspruch 7, **dadurch gekennzeichnet, daß** die zum Kalibrieren eines Durchzugs (15, 16) vorgesehenen Stempel (33, 35) miteinander fluchten und daß in einem exakten Abstand zu einem Durchzug (15) ein weiterer, kalibrierter Durchzug (15) vorgesehen ist.

9. Vorrichtung nach Anspruch 7 oder 8, **dadurch gekennzeichnet, daß** eine beim Umformen des Gehäuseteils (13, 14) zum Durchzug (15, 16) im Übergangsbereich zum Gehäuseteil (13) ausgebildete Materialaufnahme (31) vorgesehen ist.

10. Fahrzeugsitz, insbesondere Kraftfahrzeugsitz, mit einer Vorrichtung nach einem der Ansprüche 1 bis 9.

## Claims

1. Device, particularly a locking device (11) for a vehicle seat, having at least one first casing component (13) and at least one bearing (15) for bearing at least one pivotable element (23, 27, 29), **characterized in that** the bearing is produced as a first pull-through (15) in the first casing component (13) by plastic transformation, wherein the pivotable element (23, 27, 29) is beared on the first pull-through (15).

2. Device according to Claim 1, **characterized in that** a second casing component (14) is provided which forms, together with the first casing component (13), an almost closed casing, wherein the first casing component (13) serves for bearing the second casing component (14).

3. Device according to Claim 2, **characterized in that** the second casing component (14) has at least one second pull-through (16) produced by plastic transformation and that the first casing component (13) is beared with its first pull-throughs (15) on the second pull-throughs (16) of the second casing component (14), the second pull-throughs (16) being inserted into the hollow first pull-throughs (15).

4. Device according to Claim 3, **characterized in that** the first casing component (13) is linked to the second casing component (14), the second pull-throughs (16) being pushed through the pull-throughs (15) linking them to the first casing component (13).

5. Device according to one of Claims 1 to 4, **characterized in that** there at least two first pull-throughs (15) at a specified distance from each other to bearing elements interacting with one another (23, 27, 29).

6. Device according to one of Claims 1 to 5, **characterized in that** the axial length of the bearing (15) corresponds to the combined thickness of the elements beared on it (23, 27, 29).

7. Device according to one of Claims 1 to 6, **characterized in that** at least one of the pull-throughs (15, 16) is calibrated to a precise diameter through plastic transformation by means of a die (33, 35).

8. Device according to Claim 7, **characterized in that** the dies (33, 35) for calibrating a pull-through (15, 16) are in alignment and that, at a precise distance from a pull-through (15), there is another calibrated pull-through (15).

9. Device according to Claim 7 or 8, **characterized in that** there is a zone for taking up excess material (31) produced during the plastic transformation of the casing component (13, 14) into the pull-through (15, 16), in the transition area towards the casing component (13).

10. Vehicle seat, particularly a motor vehicle seat, with a device according to one of Claims 1 to 9.

## Revendications

1. Dispositif, en particulier dispositif de verrouillage (11) pour un siège de véhicule, avec au moins une première partie de carter (13) et au moins une position de montage (15) pour le montage d'au moins un élément pivotant (23, 27, 29), **caractérisé par le fait que** la position de montage est réalisée sous la forme d'un premier passage (15) obtenu par déformation, d'un seul tenant avec la première partie de carter (13), à l'occasion de quoi l'élément pivotant (23, 27, 29) est monté sur le premier passage (15).

2. Dispositif selon la revendication 1, **caractérisé par le fait qu'**une seconde partie de carter (14) est prévue, laquelle forme conjointement avec la première partie de carter (13) un carter presque fermé, à l'occasion de quoi la première partie de carter (13) sert pour le montage de la deuxième partie de carter (14).

3. Dispositif selon la revendication 2, **caractérisé par le fait que** la deuxième partie de carter (14) présente au moins un deuxième passage (16) réalisé par déformation, et que la première partie de carter (13) est montée avec son premier passage (15) sur le deuxième passage (16) de la deuxième partie de carter en ce que les deuxièmes passages (16) sont enfoncés dans les premiers passages (15) réalisés de façon creuse.

4. Dispositif selon la revendication 3, **caractérisé par le fait que** la première partie de carter (13) est reliée avec la deuxième partie de carter (14) en ce que les deuxièmes passages (16) enfoncés à travers les premiers passages (15) sont reliés avec la première partie de carter (13).

5. Dispositif selon l'une des revendications 1 à 4, **caractérisé par le fait qu'**au moins deux premiers passages (15) sont prévus avec une distance définie l'un par rapport à l'autre pour le montage d'éléments (23, 27, 29) en interaction entre eux.

6. Dispositif selon l'une des revendications 1 à 5, **caractérisé par le fait que** la longueur axiale de la position de palier (15) correspond à la somme des épaisseurs des éléments (23, 27, 29) montés sur elle.

7. Dispositif selon l'une des revendications 1 à 6, **caractérisé par le fait qu'**au moins l'un des passages prévus (15, 16) est calibré à un diamètre exact par déformation au moyen d'un poinçon (33, 35).

8. Dispositif selon la revendication 7, **caractérisé par le fait que** les poinçons (33, 35) prévus pour le calibrage d'un passage (15, 16) sont alignés entre eux et qu'à une distance exacte par rapport à un passage (15) est prévu un autre passage (15), calibré.

9. Dispositif selon l'une des revendications 7 ou 8, **caractérisé par le fait qu'**il est prévu un logement de matière (31) réalisé par déformation de la partie de carter (13, 14) au passage (15, 16) dans la zone de raccordement à la partie de carter (13).

10. Siège de véhicule, en particulier siège de véhicule automobile, avec un dispositif tel que défini à l'une des revendications 1 à 9.
